# EUROPÄISCHE PATENTSCHRIFT

(11) **EP 3 431 749 B1**
(45) Veröffentlichungstag und Bekanntmachung des Hinweises auf die Patenterteilung: **08.01.2020**
(21) Anmeldenummer: 17182127.5
(22) Anmeldetag: 19.07.2017
(51) Int. Cl.: F03D 1/06

(54) **EXTENDER ZUM BEFESTIGEN EINES ROTORBLATTS AN EINEM ROTORNABENGEHÄUSE EINER WINDENERGIEANLAGE, VERFAHREN ZUR HERSTELLUNG EINES EXTENDERS UND VERFAHREN ZUR MONTAGE EINES EXTENDERS**
EXTENDER FOR FIXING A ROTOR BLADE TO A ROTOR HUB HOUSING OF A WIND TURBINE, METHOD FOR PRODUCING AN EXTENDER AND METHOD FOR MOUNTING AN EXTENDER
EXTENSEUR DE FIXATION D'UNE PALE DE ROTOR SUR UN BOÎTIER DE NOYAU DE ROTOR D'UNE ÉOLIENNE, PROCÉDÉ DE FABRICATION D'UN EXTENSEUR ET PROCÉDÉ DE MONTAGE D'UN EXTENSEUR

(43) Veröffentlichungstag der Anmeldung: 23.01.2019
(73) Patentinhaber: Nordex Energy GmbH, 22419 Hamburg (DE)
(72) Erfinder: Manteuffel, Christine, 19069 Lübstorf (DE); Muhamad, Ibrahim, 18057 Rostock (DE)
(74) Vertreter: Garrels, Sabine

(56) Entgegenhaltungen:
- CN-A- 103 711 640
- US-A1- 2013 216 394

## Beschreibung

Die vorliegende Erfindung betrifft einen Extender zum Befestigen eines Rotorblattes an einem Rotornabengehäuse einer Windenergieanlage.

Die von Windenergieanlagen erbrachte Leistung wird wesentlich vom Rotordurchmesser und somit von der Länge der Rotorblätter bestimmt. Der Trend geht dahin, dass die Rotordurchmesser größer und damit die Windenergieanlagen höher werden. Andererseits unterliegen die Windenergieanlagen und deren Komponenten hohen Belastungen, die durch momentan auftretende Windstöße noch erheblich verstärkt werden können. Ein Problem besteht auch darin, dass bei unterschiedlichen Größen der verschiedenen Windenergieanlagen entsprechend dimensionierte Rotornaben vorzusehen sind.

Der Stand der Technik sieht daher als Lösung die Möglichkeit des Einbaus von Adaptern vor, welche den Ausgleich in den Dimensionsunterschieden ermöglichen. So wird in DE 202005007450 U1 ein Adapter zum Befestigen von Rotorblättern einer Windkraftanlage an einer Rotornabe offenbart, welcher zum Befestigen einen Anschlussbereich für das Rotorblatt und einen Anschlussbereich für die Rotornabe aufweist. Der Adapter ist zylindrisch oder leicht konisch ausgeführt. Der Anschlussbereich für das Rotorblatt ist als ein in den Adapter ragender Ring ausgeführt, in dem sich Bohrungen befinden. Mit Hilfe von durch die Bohrungen gesteckten Bolzen wird das Rotorblatt am Ring des Adapters festgeschraubt. Der Anschlussbereich für die Rotornabe ist als ein Flansch ausgeführt, an welchem eine Drehverbindung angeordnet ist.

Die Lösung in EP 2679816 B1 betrifft eine Lageranordnung für einen Windturbinenrotor mit einer Vorrichtung bestehend aus zwei Lagern, mit jeweils einem Außenring und einem Innenring sowie einem zwischen den Lagern angeordneten zylindrischen Mittelteil. Die Lageranordnung ist zwischen der Rotornabe und der Rotorblattwurzel positioniert, um eine Drehbewegung des Rotorblattes bezüglich der Rotornabe zu ermöglichen. Die Lageranordnung weist eine Vielzahl von Bolzen auf, welche eine Verbindung zwischen den Lagern und dem zylindrischen Mittelteil herstellen.

In WO 2011050806 A2 wird eine Adapter offenbart, welcher es ermöglicht, verschieden große Rotorblätter an der Rotornabe einer Windenergieanlage zu befestigen. Dazu sind auf dem Adapter mehrere Kreisringe mit Bohrungen vorgesehen, die zu dem jeweilig zu befestigenden Rotorblatt passen.

In US 2013/0216394 A1 wird ein Extender offenbart, welcher in axialer Richtung zylindrisch oder konisch ausgeführt ist, wobei der Extender einerseits mit einer rotornabenseitigen Drehverbindung und andererseits mit dem Rotorblatt verbunden ist.

CN 103711640 A offenbart ein Rotorblatt einer Windenergieanlage, welcher auf seiner Innenwand mit Versteifungsrippen versehen ist. In diese Versteifungsrippen können in dafür vorgesehene Bohrungen Bolzen über die gesamte Länge der Versteifungsrippe als Längsverstärkungsverbindungen eingefügt werden. Dadurch werden die dünnwandigen Schalen des Rotorblattes gegen die Wirkung der Axialkraft stabilisiert und die Knickstabilität der Schalen erhöht.

### Darstellung der Erfindung

Aufgabe der Erfindung ist es, die Befestigung eines Rotorblatts an einem Rotornabengehäuse so zu verbessern, dass höhere Belastungen, welche durch die Größe des Rotorblattes bestimmt werden, aufgefangen werden können. Weiterhin ist es die Aufgabe, eine vereinfachte Montage der Rotorblätter zu ermöglichen ohne von der Größe der Windenergieanlage abhängig zu sein. Dazu soll der Zugang für die benötigten Werkzeuge vereinfacht werden. Erfindungsgemäß wird die Aufgabe durch einen Extender gelöst, welcher an einer Rotornabe einer Windenergieanlage als mechanische Verbindung zwischen einer Drehverbindung, insbesondere einer Pitchdrehverbindung und einem Rotorblatt dient.

Der erfindungsgemäße Extender ist mit zylindrischen oder konischen Konturen in axialer Richtung ausgeführt und umfasst einen ersten Verbindungsbereich für eine Verbindung des Extenders mit einer rotornabenseitigen Drehverbindung und einem zweiten Verbindungsbereich für eine Verbindung des Extenders mit dem Rotorblatt. Der zweite Verbindungsbereich ist dem ersten Verbindungsbereich gegenüberliegend angeordnet und weist einen ringförmigen Flansch mit einer Anzahl an axialen Bohrungen auf, welche umfangsmäßig auf dem ringförmigen Flansch verteilt angeordnet sind. Erfindungswesentlich ist, dass der zweite Verbindungsbereich zwischen den Bohrungen umfangsmäßig verteilt in Richtung des ersten Verbindungsbereichs gerichtete und im Innern des Extenders angeordnete Versteifungsrippen aufweist, welche fest mit dem zweiten Verbindungsbereich verbunden sind, in der Art, dass zwischen zwei Bohrungen jeweils eine Versteifungsrippe angeordnet ist, und dass die Versteifungsrippen mit axialen Bohrungen versehen sind. Die Bohrungen können Durchgangsbohrungen sein.

Das erfindungsgemäße Verfahren zur Herstellung eines Extenders zum Befestigen eines Rotorblatts an einem Rotornabengehäuse einer Windenergieanlage ist dadurch gekennzeichnet, dass der Extender als Rohguss mit einem ersten Verbindungsbereich für eine Verbindung des Extenders mit einer rotornabenseitigen Drehverbindung und einem zweiten Verbindungsbereich für eine Verbindung des Extenders mit dem Rotorblatt hergestellt wird. Der zweite Verbindungsbereich ist dem ersten Verbindungsbereich gegenüberliegend angeordnet, wobei gleichzeitig an dem zweiten Verbindungsbereich umfangsmäßig verteilt in Richtung des ersten Verbindungsbereichs gerichtete und im Innern des Extenders angeordnete Versteifungsrippen angeformt werden. Dem Rohguss nachfolgend wird der Extender mechanisch bearbeitet. In einen ringförmigen Flansch des zweiten Verbindungsbereichs wird eine Anzahl an axialen Bohrungen zwischen die Versteifungsrippen eingebracht. Zusätzlich wird jeweils eine Bohrung axial in die Versteifungsrippen eingebracht. Mittels Plandrehen wird die Oberfläche der Versteifungsrippen nachbehandelt.

Erfindungsgemäß ist außerdem ein Verfahren zur Montage zum Befestigen eines Rotorblatts an einem Rotornabengehäuse einer Windenergieanlage mittels eines Extenders der oben genannten Art. Entweder wird der Extender an dem Rotorblatt vormontiert und als Baugruppe an die Rotornabe montiert oder der Extender wird an dem Rotornabengehäuse befestigt und anschließend das jeweilige Rotorblatt montiert.

Dieses Design erlaubt es, gegenüber aus dem Stand der Technik bekannten Lösungen eine doppelte Bolzenanzahl einzusetzen und weiterhin verstärkende Versteifungsrippen zu behalten.

### Ausführung der Erfindung

Die Erfindung wird anhand eines Ausführungsbeispiels näher erläutert. Hierzu zeigen
- Figur 1: eine Windenergieanlage mit einer Rotornabe und drei Rotorblättern mit jeweils einem Extender,
- Figur 2: einen erfindungsgemäßen Extender in einer Schnittdarstellung,
- Figur 3: einen erfindungsgemäßen Extender in einer Ansicht von unten,

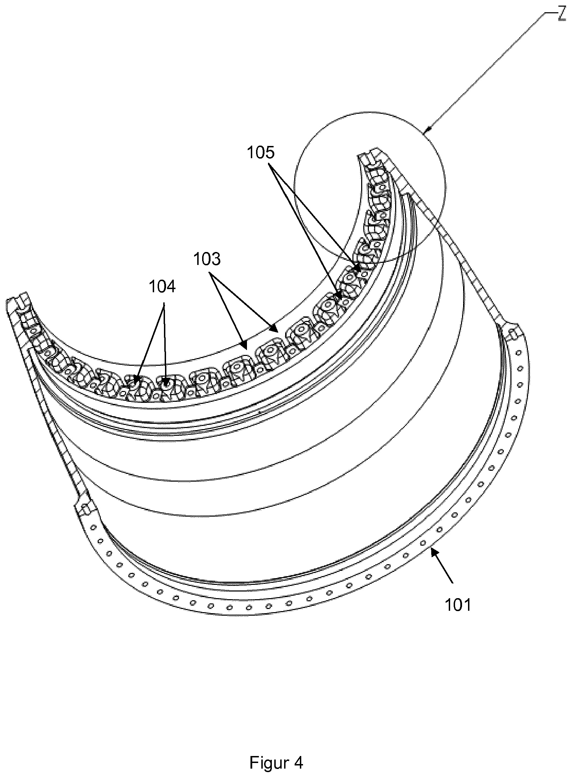

- Figur 4: einen erfindungsgemäßen Extender in einer dreidimensionalen Schnittdarstellung und

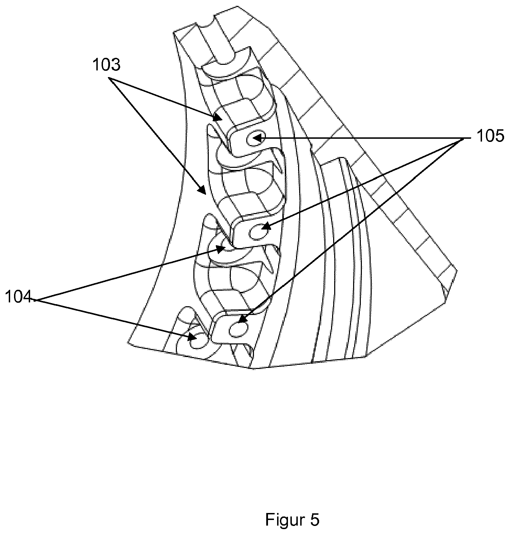

- Figur 5: einen Ausschnitt Z aus Figur 4.

Eine Windenergieanlage hat neben anderen Komponenten eine Rotornabe, die mit mindestens einer Drehverbindung (Pitchdrehverbindung) ausgestattet ist. Die Drehverbindung ist als ein Pitchlager mit einem Innenring und einem Außenring ausgebildet. Der drehbare Innenring der Drehverbindung wird üblicherweise mit der Wurzel eines Rotorblatts verbunden.

Ein Extender im Sinne der Erfindung ist ein Adapter zum Befestigen eines Rotorblattes an einer Rotornabe einer Windenergieanlage. Der erfindungsgemäße Extender stellt im Allgemeinen eine mechanische Verbindung zwischen der Drehverbindung des Rotorblatts und dem Rotorblatt der Windenergieanlage dar und wird vorzugsweise am drehbaren Innenring der Drehverbindung befestigt. Durch einen entsprechenden Extender ist es möglich, unterschiedlich dimensionierte Rotorblätter an der Rotornabe zu befestigen.

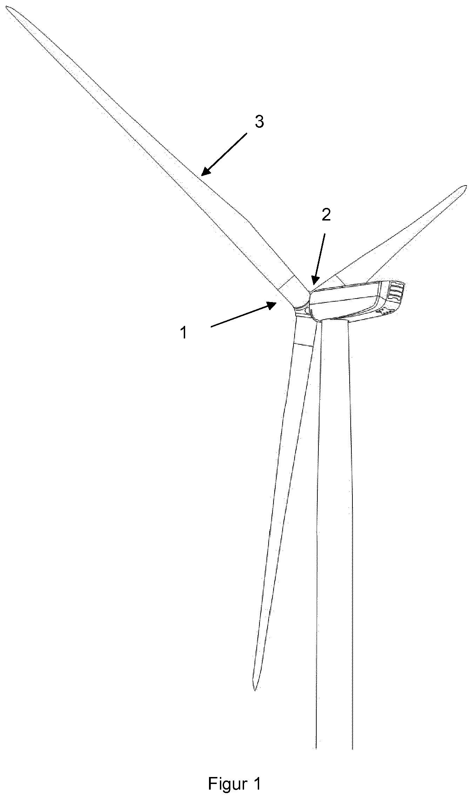

Figur 1 zeigt ein Beispiel für die Anordnung des Extenders 1 zwischen der Rotornabe 2 und dem Rotorblatt 3. Der Extender 1 ist in der Regel mit zylindrischen oder konischen Konturen in axialer Richtung ausgeführt.

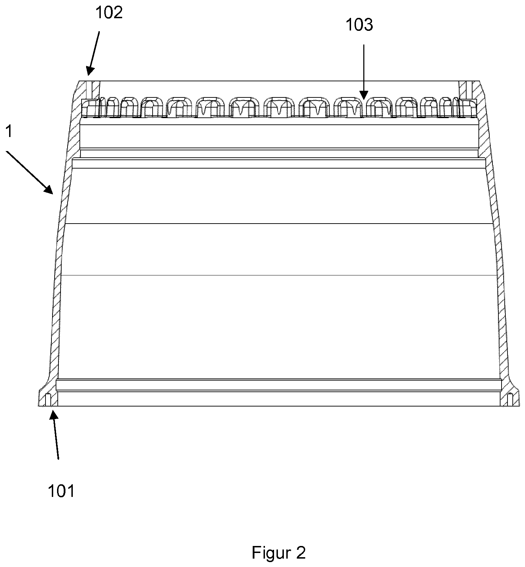

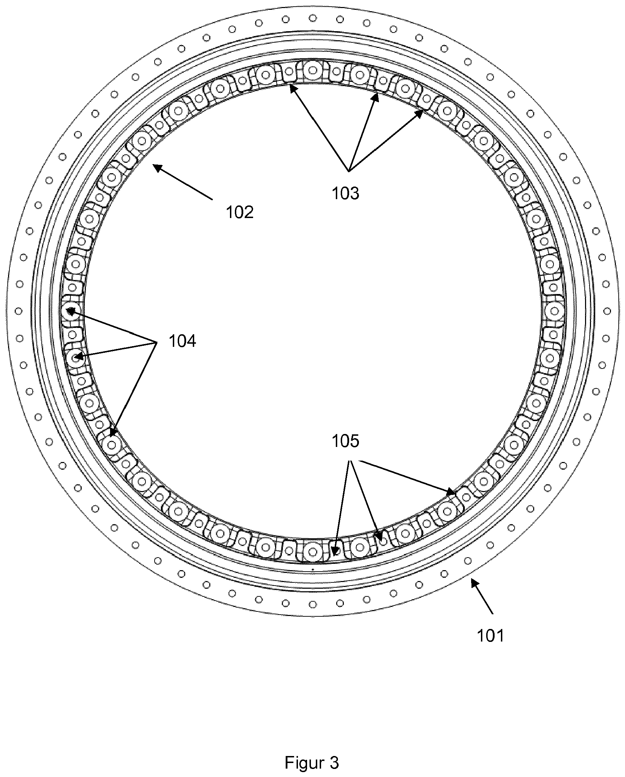

In Figur 2 wird der erfindungsgemäße Extender 1 in einer Schnittdarstellung und in Figur 3 in einer Ansicht von unten gezeigt. Der Extender 1 weist einen ersten und einen zweiten Verbindungsbereich auf. Mittels des ersten Verbindungsbereichs 101 wird die Verbindung des Extenders 1 mit einer rotornabenseitig montierten Drehverbindung und mittels des zweiten Verbindungsbereichs 102 mit einer Wurzel des Rotorblatts 3 hergestellt. Der erste Verbindungsbereich 101 ist als ein umlaufender Flansch gestaltet, welcher durch Verbindungsmittel (hier nicht gezeigt) an der rotornabenseitig montierten Drehverbindung befestigt wird. Erfindungsgemäß ist an der dem Rotorblatt 3 zugewandten Seite des Extenders 1 der zweite Verbindungsbereich 102 angeformt, der einen ringförmigen Flansch aufweist. Dieser zweite Verbindungsbereich 102 weist eine Anzahl an axialen Bohrungen 104 auf, durch welche mit den entsprechenden Mitteln das Rotorblatt 3 befestigt wird. Die Bohrungen 104 sind umfangsmäßig verteilt auf einem Kreis mit gegebenem Radius angeordnet. Bei den Bohrungen 104 handelt es sich typischerweise um Durchgangsbohrungen. Die Bohrungen 104 können ein Innengewinde aufweisen.

Zwischen den Bohrungen 104 sind ebenfalls umfangsmäßig verteilt in Richtung des ersten Verbindungsbereichs 101 gerichtete und im Innern des Extenders 1 angeordnete Versteifungsrippen 103 fest mit dem zweiten Verbindungsbereich 102 verbunden, so dass zwischen zwei Bohrungen 104 jeweils eine Versteifungsrippe 103 angeordnet ist. Die Versteifungsrippen 103 sind ebenfalls mit durchgängigen axialen Bohrungen 105 versehen. Auch diese Bohrungen 105 können ein Innengewinde aufweisen.

Die Versteifungsrippen 103 werden beim Herstellungsprozess gezielt im Rohguss hergestellt und anschließend zusätzlich mechanisch bearbeitet. Sie sind so dimensioniert, dass die Bohrungen 105 eingebracht werden können. Nach dem Einbringen der Bohrungen wird der Extender 1 mittels Plandrehen der Oberfläche der Versteifungsrippen 103 nachbehandelt, um eine Auflage für die Bolzen zu erzeugen und damit eine zweite Bolzenreihe zuzulassen. So wird eine doppelte Bolzenanzahl ermöglicht und es kann beispielsweise ein größeres Rotorblatt 3 befestigt und somit eine höhere Last aufgenommen werden. Auch wird der Kraftfluss im Extender 1 verbessert.

Die Montage des Rotorblatts 3 an dem Rotornabengehäuse mittels der oben beschriebenen Extender 1 erfolgt entweder indem der Extender 1 an dem jeweiligen Rotorblatt 3 vormontiert und als Baugruppe an die Rotornabe 2 montiert wird oder der Extender 1 an dem Rotornabengehäuse befestigt und anschließend das jeweilige Rotorblatt 3 montiert wird.

Durch das Verschrauben des Extenders 1 an dem Rotorblatt 3 als Vormontageeinheit, kann das Rotorblatt 3 beim Heben versteift werden. Die Montageschritte sind vergleichbar mit der Montage einer Autofelge an der Radnabe 2: Der Extender 1 wird zur Rotorblattwurzel bzw. zum Innenring der Drehverbindung positioniert, die Bohrungen des Extenders 1 und des Rotorblattes 3 werden zueinander ausgerichtet. In der Regel sind in der Rotorblattwurzel Gewindebolzen eingebracht, die herausragen. Somit werden innerhalb des Extenders 1 Muttern aufgedreht. An der Seite der Rotornabe 2 werden von innen Bolzen in die Innengewinde des Extenders 1 eingeschraubt.

Da es sich bei dem vorhergehend, detailliert beschriebenen Extender 1 um ein Ausführungsbeispiel handelt, kann dieses in üblicher Weise vom Fachmann in einem weiten Umfang modifiziert werden, ohne den Bereich der Erfindung zu verlassen. So ist auch eine Anordnung der Versteifungsrippen 103 auf der anderen Flanschseite (Rotornabe 2, Drehverbindung) denkbar. Insbesondere können auch die konkreten Ausgestaltungen der Versteifungsrippen 103 in anderer Form als in der hier beschriebenen folgen. Weiter schließt die Verwendung der unbestimmten Artikel "ein" bzw. "eine" nicht aus, dass die betreffenden Merkmale auch mehrfach vorhanden sein können.

### Bezugszeichen

- 1: Extender
- 101: erster Verbindungsbereich
- 102: zweiter Verbindungsbereich
- 103: Versteifungsrippen
- 104: Bohrungen
- 105: axiale Bohrungen in den Versteifungsrippen
- 2: Rotornabe
- 3: Rotorblatt

## Patentansprüche

1. Extender (1) zum Befestigen eines Rotorblatts (3) an einem Rotornabengehäuse einer Windenergieanlage, wobei der Extender (1) mit zylindrischen oder konischen Konturen in axialer Richtung ausgeführt ist, umfassend einen ersten Verbindungsbereich (101) für eine Verbindung des Extenders (1) mit einer rotornabenseitigen Drehverbindung und einem zweiten Verbindungsbereich (102) für eine Verbindung des Extenders (1) mit dem Rotorblatt (3), wobei der zweite Verbindungsbereich (102) dem ersten Verbindungsbereich (101) gegenüberliegend angeordnet ist und einen ringförmigen Flansch mit einer Anzahl an axialen Bohrungen (104) aufweist, welche umfangsmäßig auf dem ringförmigen Flansch verteilt angeordnet sind, und wobei der zweite Verbindungsbereich (102) im Innern des Extenders (1) angeordnete Versteifungsrippen (103) aufweist,
**dadurch gekennzeichnet, dass**
die Versteifungsrippen (103) zwischen den Bohrungen (104) umfangsmäßig verteilt in Richtung des ersten Verbindungsbereichs (101) gerichtet und fest mit dem zweiten Verbindungsbereich (102) verbunden sind, in der Art, dass zwischen zwei Bohrungen (104) jeweils eine Versteifungsrippe (103) angeordnet ist, und dass die Versteifungsrippen (103) mit axialen Bohrungen (105) versehen sind.

2. Extender nach Anspruch 1 **dadurch gekennzeichnet, dass**
die Bohrungen (104, 105) Durchgangsbohrungen sind.

3. Verfahren zur Herstellung eines Extenders (1) zum Befestigen eines Rotorblatts (3) an einem Rotornabengehäuse einer Windenergieanlage mit den Schritten:
Herstellen des Extenders (1) als Rohguss mit einem ersten Verbindungsbereich (101) für eine Verbindung des Extenders (1) mit einer rotornabenseitigen Drehverbindung und einem zweiten Verbindungsbereich (102) für eine Verbindung des Extenders (1) mit dem Rotorblatt (3), wobei der zweite Verbindungsbereich (102) dem ersten Verbindungsbereich (101) gegenüberliegend angeordnet ist,
gleichzeitiges Anformen von an dem zweiten Verbindungsbereich (102) umfangsmäßig verteilten in Richtung des ersten Verbindungsbereichs (101) gerichteten und im Innern des Extenders (1) angeordneten Versteifungsrippen (103),
anschließende mechanische Bearbeitung der Versteifungsrippen (103), Einbringen einer Anzahl an axialen Bohrungen (104) in einen ringförmigen Flansch des zweiten Verbindungsbereichs (102) zwischen die Versteifungsrippen (103) und
Einbringen jeweils einer axialen Bohrung (105) in jede Versteifungsrippe (103).

4. Verfahren nach Anspruch 3 **dadurch gekennzeichnet, dass** mittels Plandrehen ihrer Oberfläche die Versteifungsrippen (103) nachbehandelt werden.

5. Verwendung eines Extenders (1) gemäß der Ansprüche 1 und 2 zum Befestigen eines Rotorblatts an einem Rotornabengehäuse einer Windenergieanlage.

6. Verfahren zur Montage zum Befestigen eines Rotorblatts an einem Rotornabengehäuse einer Windenergieanlage mittels eines Extenders (1) gemäß der Ansprüche 1 und 2,
wobei der Extender (1) an dem jeweiligen Rotorblatt (3) vormontiert und als Baugruppe an die Rotornabe (2) montiert wird oder
der Extender (1) an dem Rotornabengehäuse befestigt und anschließend das jeweilige Rotorblatt (3) montiert wird.

## Claims

1. Extender (1) for mounting a rotor blade (3) to a rotor hub housing of a wind turbine, wherein the extender (1) is produced with cylindrical or conical contours in the axial direction, comprising a first connection region (101) for a connection of the extender (1) with a rotor-hub-side rotational connection and a second connection region (102) for a connection of the extender (1) with the rotor blade (3), wherein the second connection region (102) is arranged opposite the first connection region (101) and has an annular flange with a number of axial bores (104) which are arranged distributed over the circumference of the annular flange, and wherein the second connection region (102) has stiffening ribs (103) arranged in the interior of the extender (1),
**characterized in that**
the stiffening ribs (103) are distributed circumferentially between the bores (104), are oriented in the direction of the first connection region (101) and are solidly joined to the second connection region (102) such that one stiffening rib (103) is arranged between every two bores (104), and such that the stiffening ribs (103) are provided with axial bores (105).

2. Extender according to Claim 1, **characterized in that**
the bores (104, 105) are through-bores.

3. Method for producing an extender (1) for mounting a rotor blade (3) to a rotor hub housing of a wind turbine, having the following steps:
producing the extender (1) as a rough casting with a first connection region (101) for a connection of the extender (1) with a rotor-hub-side rotational connection and a second connection region (102) for a connection of the extender (1) with the rotor blade (3), wherein the second connection region (102) is arranged opposite the first connection region (101),
simultaneously integrally forming stiffening ribs (103) that are distributed circumferentially on the second connection region (102), are oriented in the direction of the first connection region (101) and are arranged in the interior of the extender (1), subsequent mechanical machining of the stiffening ribs (103),
introducing a number of axial bores (104) in an annular flange of the second connection region (102) between the stiffening ribs (103) and introducing one axial bore (105) into each stiffening rib (103).

4. Method according to Claim 3, **characterized in that** the stiffening ribs (103) are post-treated by face cutting of their surface.

5. Use of an extender (1) according to Claims 1 and 2 for mounting a rotor blade to a rotor hub housing of a wind turbine.

6. Method for mounting a rotor blade to a rotor hub housing of a wind turbine using an extender (1) according to Claims 1 and 2,
wherein the extender (1) is pre-assembled on the respective rotor blade (3)and mounted as an assembly on the rotor hub (2), or
the extender (1) is mounted to the rotor hub housing and then the respective rotor blade (3) is mounted.

## Revendications

1. Extenseur (1) pour la fixation d'une pale de rotor (3) à un boîtier de moyeu de rotor d'une éolienne, l'extenseur (1) étant réalisé avec des contours cylindriques ou coniques dans la direction axiale, comprenant une première région de raccordement (101) pour un raccordement de l'extenseur (1) à une liaison rotative du côté du moyeu de rotor et une deuxième région de raccordement (102) pour un raccordement de l'extenseur (1) à la pale de rotor (3), la deuxième région de raccordement (102) étant disposée à l'opposé de la première région de raccordement (101) et présentant une bride annulaire avec une pluralité d'alésages axiaux (104), qui sont disposés de manière répartie sur la périphérie sur la bride annulaire, et la deuxième région de raccordement (102) présentant des nervures de renforcement (103) disposées à l'intérieur de l'extenseur (1),
**caractérisé en ce que**
les nervures de renforcement (103) sont orientées dans la direction de la première région de raccordement (101) de manière répartie sur la périphérie entre les alésages (104) et sont raccordées fixement à la deuxième région de raccordement (102) de telle sorte qu'à chaque fois une nervure de renforcement (103) soit disposée entre deux alésages (104), et **en ce que** les nervures de renforcement (103) sont pourvues d'alésages axiaux (105).

2. Extenseur selon la revendication 1, **caractérisé en ce que** les alésages (104, 105) sont des alésages traversants.

3. Procédé de fabrication d'un extenseur (1) pour la fixation d'une pale de rotor (3) à un boîtier de moyeu de rotor d'une éolienne, comprenant les étapes suivantes :
fabrication de l'extenseur (1) sous forme de pièce brute coulée avec une première région de raccordement (101) pour un raccordement de l'extenseur (1) à une liaison rotative du côté du moyeu du rotor et une deuxième région de raccordement (102) pour un raccordement de l'extenseur (1) à la pale de rotor (3), la deuxième région de raccordement (102) étant disposée à l'opposé de la première région de raccordement (101),
façonnage simultané de nervures de renforcement (103) orientées dans la direction de la première région de raccordement (101) de manière répartie sur la périphérie au niveau de la deuxième région de raccordement (102) et disposées à l'intérieur de l'extenseur (1),
usinage mécanique subséquent des nervures de renforcement (103),
introduction d'une pluralité d'alésages axiaux (104) dans une bride annulaire de la deuxième région de raccordement (102) entre les nervures de renforcement (103) et
introduction d'un alésage axial respectif (105) dans chaque nervure de renforcement (103).

4. Procédé selon la revendication 3, **caractérisé en ce que** les nervures de renforcement (103) sont post-traitées au moyen d'un surfaçage de leur surface.

5. Utilisation d'un extenseur (1) selon les revendications 1 et 2, pour la fixation d'une pale de rotor un boîtier de moyeu de rotor d'une éolienne.

6. Procédé de montage pour la fixation d'une pale de rotor à un boîtier de moyeu de rotor d'une éolienne au moyen d'un extenseur (1) selon les revendications 1 et 2,
l'extenseur (1) étant prémonté sur la pale de rotor respective (3) et étant monté en tant que module sur le moyeu de rotor (2) ou
l'extenseur (1) étant fixé au boîtier de moyeu de rotor et ensuite la pale de rotor respective (3) étant montée.
